# EUROPÄISCHE PATENTSCHRIFT

(11) **EP 2 877 730 B1**
(45) Veröffentlichungstag und Bekanntmachung des Hinweises auf die Patenterteilung: **18.11.2026**
(21) Anmeldenummer: 13735046.8
(22) Anmeldetag: 11.07.2013
(51) Int. Cl.: F02D 41/00, F02D 13/02, F02B 37/24, F02D 15/00, F02D 41/10, F02M 26/22, F01L 13/00

(54) **VERFAHREN ZUM BETREIBEN EINES VERBRENNUNGSMOTORS**
METHOD FOR OPERATING AN INTERNAL COMBUSTION ENGINE
PROCÉDÉ POUR FAIRE FONCTIONNER UN MOTEUR À COMBUSTION INTERNE

(30) Priorität: 25.07.2012 DE 102012014713
(43) Veröffentlichungstag der Anmeldung: 03.06.2015
(73) Patentinhaber: Volkswagen Aktiengesellschaft, 38440 Wolfsburg (DE)
(72) Erfinder: HOFFMEYER, Henrik, 30161 Hannover (DE); LINDENKAMP, Nils, 38126 Braunschweig (DE)
(86) Internationale Anmeldenummer: PCT/EP2013/064662
(87) Internationale Veröffentlichungsnummer: WO 2014/016133

(56) Entgegenhaltungen:
- EP-B1- 2 041 414
- WO-A1-2006/022449
- DE-A1- 10 159 801
- DE-A1- 102004 061 110

## Beschreibung

Die folgende Erfindung betrifft ein Verfahren zum Betreiben eines Verbrennungsmotors, insbesondere ein Verfahren zum Betreiben eines aufgeladenen, hochverdichteten Ottomotors, welcher eine variable Ventileinstellung, einen sogenannten variablen Ventiltrieb, aufweist und welcher nach dem Miller-Brennverfahren angesteuert wird.

Bei Ottomotoren, welche beispielsweise in Personenkraftwagen oder Lastwagen verwendet werden können, ist der thermodynamische Wirkungsgrad aufgrund der notwendigen Drosselung der quantitativen Laststeuerung sowie des reduzierten Verdichtungsverhältnisses zur Vermeidung von Motorklopfen begrenzt. Ein Ansatz zur Entdrosselung im Teillastbetrieb und zur möglichen Erhöhung des geometrischen Verdichtungsverhältnisses stellen die so genannten "Miller/Atkinson-Verfahren" dar. Hier werden über ein frühes/spätes Schließen der Einlassventile (FES = frühes Einlass schließt, SES = spätes Einlass schließt) der Luftaufwand und die effektive Verdichtung reduziert. Dadurch kann der Motor entdrosselt werden und die Verdichtungsendtemperatur und damit die Klopfneigung reduziert werden oder die geometrische Verdichtung erhöht werden. Durch den Einsatz des hochverdichteten Miller-Brennverfahrens wird der Luftaufwand des Motors reduziert und es bedarf eines höheren Ladedrucks bei vergleichbarer Leistung. Dies kann zu einer reduzierten Dynamik des Aufladeaggregats führen. Mit den zur Verfügung stehenden Ventiltriebsvariabilitäten kann der Verbrennungsmotor jedoch theoretisch auch "drosselfrei" betrieben werden, d.h., ohne eine Drosselklappeneinstellung. Daraus folgt, dass der Verbrennungsmotor über den Luftaufwand zu regeln ist. Der Luftaufwand beschreibt das Verhältnis aus durch den Motor durchgesetzter Luftmasse zu der möglichen Luftmasse bestimmt anhand eines thermodynamischen Zustands im Saugrohr.

In diesem Zusammenhang ist aus der EP 2041414 B1 ein Verfahren zum Betrieb eines Ottomotors bekannt. Bei dem Verfahren wird ein Einlassventil des Ottomotors sehr früh oder sehr spät geschlossen und die dem Motor zugeführte Verbrennungsluft mit einem Lader verdichtet. Das sehr frühe oder sehr späte Schließen des Einlassventils in Verbindung mit einem gegenüber dem aufgeladenen Normalbetrieb erhöhten geometrischen Verdichtungsverhältnis erzeugt eine Verringerung des Temperaturniveaus bei erhöhtem thermodynamischen Wirkungsgrad. Die durch die Schließzeiten der Einlassventile verringerte Zylinderfüllung wird durch die Verdichtung des Verbrennungsluftstroms mittels des Laders zumindest näherungsweise kompensiert, so dass ein hinreichendes Leistungsniveau zur Verfügung steht. Als weitere Maßnahme zur Temperaturverringerung wird dem Verbrennungsluftstrom zumindest bei Volllast ein Teilstrom von abgeführtem Abgas als Abgasrückführung zurückgeführt.

Die DE 10 159 801 A1 betrifft einen Verbrennungsmotor mit mindestens einem Aufladegerät, welches vom Abgasstrom des Verbrennungsmotors angetrieben wird, und mit einer nach dem Miller-Brennverfahren verstellbaren Nockenwelle, wobei seriell oder parallel zum Aufladegerät eine weitere Verdichterstufe angeordnet ist, welche nicht vom Abgasstrom des Verbrennungsmotors angetrieben wird. Bei niedrigen Drehzahlen des Verbrennungsmotors wird der Ladedruck durch Aktivieren der weiteren Verdichterstufe erhöht.

Die DE 10 233 256 A1 betrifft ein Verfahren zur Zündung eines Kraftstoff-Luft-Gemischs bei einem Ottomotor mit Kraftstoff-Direkteinspritzung mit einer Vorkammer und Funkenzündung in der Vorkammer. Die Vorkammer steht mit einer kleinen Kolbenmulde in Wirkverbindung. Zudem besteht die Möglichkeit, durch eine gezielte Veränderung der Ventilsteuerzeiten eine Anpassung an unterschiedliche Anforderungen vorzunehmen, wobei insbesondere ein später Zeitpunkt für das Auslassventilschließen dazu dient, dass Kraftstoffanteile, welche als Folge der Einspritzung während des Ausschiebetaktes in den Abgaskanal gelangen, durch eine "innere" Abgasrückführung wieder in den Brennraum zurück geschoben werden und somit bei der Umsetzung des Gemischs im Hauptbrennraum verbrannt werden, so dass sich kein Wirkungsgradverlust des Motors ergibt.

Die DE 10 2004 061 110 A1 beschreibt ein Verfahren zum Betreiben einer Brennkraftmaschine, wobei eine Abweichung eines angeforderten Soll-Drehmoments von einem aktuellen Drehmoment oder eine Abweichung eines angeforderten Soll-Ladedrucks von einem aktuellen Ladedruck erkannt wird und in Abhängigkeit dieser Abweichung eine Ventilüberschneidung eingestellt wird.

Aufgabe der vorliegenden Erfindung ist es, eine verbesserte Betriebstrategie für einen hochverdichteten, aufgeladenen Ottomotor nach dem Miller-Brennverfahren bereitzustellen.

Diese Aufgabe wird gemäß der vorliegenden Erfindung durch ein Verfahren zum Betreiben eines Verbrennungsmotors nach Anspruch 1, einen Verbrennungsmotor nach Anspruch 6 und ein Fahrzeug nach Anspruch 8 gelöst. Die abhängigen Ansprüche definieren bevorzugte und vorteilhafte Ausführungsformen der Erfindung.

Gemäß der vorliegenden Erfindung wird ein Verfahren zum Betreiben eines Verbrennungsmotors bereitgestellt. Der Verbrennungsmotor umfasst einen Verdichter zum Einstellen einer Ladungsdichte in einem Saugrohr des Verbrennungsmotors und ein Einstellmittel zum Einstellen eines Liefergrads des Verbrennungsmotors. Das Einstellmittel kann beispielsweise einen variablen Ventiltrieb umfassen, welcher beispielsweise eine diskrete Ventilhubkurvenumschaltung oder eine kontinuierliche Variabilität und/oder eine ein- und auslassseitige Phasenverstellung aufweist. Bei dem Verfahren wird eine dynamische Sollgröße für den Verbrennungsmotor in Abhängigkeit von einer Differenz zwischen einer Lastanforderung an den Verbrennungsmotor, welche beispielsweise über ein Gaspedal vorgegeben wird, und einer aktuellen Lastabgabe des Verbrennungsmotors bestimmt. Der Liefergrad und die Ladungsdichte werden in Abhängigkeit von der dynamischen Sollgröße eingestellt. Durch die Einstellung des Liefergrads kann der Verbrennungsmotor in einem entdrosselten Zustand betrieben werden. Indem sowohl der Liefergrad als auch die Ladungsdichte als Führungsgrößen für die Lasteinstellung und somit Momentenregelung des Verbrennungsmotors verwendet werden, steht ein erweiterter Parameterraum zur Lastregelung zur Verfügung. Dadurch kann die Dynamik des Verbrennungsmotors und/oder der Wirkungsgrad des Verbrennungsmotors verbessert werden.

Gemäß einer Ausführungsform wird der Liefergrad in Abhängigkeit von der dynamischen Sollgröße eingestellt und die Ladungsdichte in Abhängigkeit von der dynamischen Sollgröße und dem eingestellten Liefergrad. Da die Totzeit oder Reaktionszeit des Verdichters, d.h., die Zeit bis der Verdichter eine angeforderte Ladungsdichte in dem Saugrohr des Verbrennungsmotors einstellt, größer ist als die Totzeit des Einstellmittels zum Einstellen des Liefergrads (variabler Ventiltrieb), ist die Liefergradregelung der führende Steller und die Regelung der Ladungsdichte der folgende Steller. Dadurch kann eine hohe Dynamik des Verbrennungsmotors bei sich ändernden Lastanforderungen und ein Wirkungsgrad optimaler Zustand, insbesondere bei quasistationären Zuständen, erreicht werden.

Gemäß einer weiteren Ausführungsform kann über das Einstellmittel (den variablen Ventiltrieb) ferner ein Restgasanteil in einer Zylinderfüllung des Verbrennungsmotors eingestellt werden (interne Abgasrückführung). Der Restgasanteil wird in Abhängigkeit von der dynamischen Sollgröße eingestellt und die Ladungsdichte in Abhängigkeit von der dynamischen Sollgröße, dem eingestellten Liefergrad und dem eingestellten Restgasanteil eingestellt. Da wiederum eine Totzeit zur Änderung des eingestellten Restgasanteils geringer ist als eine Totzeit zur Veränderung der Ladungsdichte ist, ist die Restgasanteilregelung der führende Steller und die Regelung der Ladungsdichte der folgende Steller.

Gemäß der vorliegenden Erfindung wird die dynamische Sollgröße in Abhängigkeit von einer Differenz zwischen der Lastanforderung an den Verbrennungsmotor und der aktuellen Lastabgabe des Verbrennungsmotors und in Abhängigkeit von einer zeitlichen Änderung der Lastanforderung bestimmt. Die zeitliche Änderung der Lastanforderung kann beispielsweise eine Signaländerungsgeschwindigkeit des Pedalwertgebers des Gaspedals des Fahrzeugs umfassen. Indem auch die zeitliche Änderung der Lastanforderung erfasst und bei der Einstellung des Liefergrads und der Ladungsdichte berücksichtigt wird, kann ein hinsichtlich der Antriebsdynamik des Verbrennungsmotors ein von einem Fahrer des Fahrzeugs gewünschtes Fahrverhalten bedarfsgerecht abgebildet und realisiert werden.

Gemäß einer weiteren Ausführungsform umfasst der Verbrennungsmotor einen Ottomotor, welcher ein geometrisches Verdichtungsverhältnis im Bereich von 12:1 bis 15:1 aufweist. Ein derartiger Verbrennungsmotor wird auch als hochverdichteter Verbrennungsmotor bezeichnet. Der hochverdichtete Verbrennungsmotor wird gemäß dem Miller-Brennverfahren angesteuert. Durch den Betrieb des Verbrennungsmotors nach dem Miller-Brennverfahren kann eine Klopfneigung des Motors verringert werden und somit eine Leistung und Haltbarkeit des Verbrennungsmotors verbessert werden.

Gemäß der vorliegenden Erfindung wird zum Einstellen des Liefergrads zunächst ein Einstellbereich eines Ventilhubs des variablen Ventiltriebs in Abhängigkeit von der aktuellen Lastabgabe bestimmt. Ferner wird ein Einstellbereich einer Phasenlage einer Einlassnockenwelle des variablen Ventiltriebs in Abhängigkeit von der aktuellen Lastabgabe und ein Einstellbereich einer Phasenlage einer Auslassnockenwelle des variablen Ventiltriebs in Abhängigkeit von der aktuellen Lastabgabe bestimmt. Der Ventilhub, die Phasenlage der Einlassnockenwelle und die Phasenlage der Auslassnockenwelle werden in Abhängigkeit von der dynamischen Sollgröße innerhalb der jeweiligen bestimmten Einstellbereiche eingestellt. Indem zunächst die aktuell möglichen Einstellbereiche des variablen Ventiltriebs ermittelt werden, kann eine so genannte Reserve orientierte Führungsstrategie der Momentenregelung des Verbrennungsmotors durchgeführt werden. Anders ausgedrückt, kann in Abhängigkeit der angeforderten Laständerung und der angeforderten Laständerungsdynamik der variable Ventiltrieb in Abhängigkeit von einem aktuellen Lastzustand des Verbrennungsmotors derart eingestellt werden, dass die gewünschte Laständerung wie gefordert mit möglichst hoher Dynamik oder eher wirkungsgradoptimiert und somit verbrauchsgünstig realisiert wird.

Gemäß einer Ausführungsform wird der Verdichter von einer Abgasturbine des Verbrennungsmotors mit variabler Turbinengeometrie angetrieben. Zum Einstellen der Ladungsdichte wird ein Einstellbereich der variablen Turbinengeometrie in Abhängigkeit von der aktuellen Lastabgabe bestimmt und die variable Turbinengeometrie in Abhängigkeit von der dynamischen Sollgröße innerhalb des so bestimmten Einstellbereichs eingestellt. Durch Verändern der variablen Turbinengeometrie kann eine Einstellgeschwindigkeit einer gewünschten Ladungsdichte verändert werden. Dadurch kann über die Einstellung der Turbinengeometrie eine schnelle Änderung der Last und Momentenabgabe des Verbrennungsmotors oder ein verbesserter Wirkungsgrad erreicht werden.

Gemäß der vorliegenden Erfindung wird weiterhin ein Verbrennungsmotor bereitgestellt, welcher einen Verdichter zum Einstellen einer Ladungsdichte in einem Saugrohr des Verbrennungsmotors, ein Einstellmittel zum Einstellen eines Liefergrads des Verbrennungsmotors und eine Steuervorrichtung umfasst. Die Steuervorrichtung ist in der Lage, eine dynamische Sollgröße für den Verbrennungsmotor in Abhängigkeit von einer Differenz zwischen einer Lastanforderung an den Verbrennungsmotor und einer aktuellen Lastabgabe des Verbrennungsmotors zu bestimmen und den Liefergrad und die Ladungsdichte in Abhängigkeit von der dynamischen Sollgröße einzustellen. Durch die Einstellung von sowohl dem Liefergrad als auch der Ladungsdichte zur Realisierung einer Laständerung können sowohl eine Dynamik des Verbrennungsmotors als auch ein Wirkungsgrad des Verbrennungsmotors verbessert werden. Unter der Dynamik des Verbrennungsmotors wird im Zusammenhang mit der vorliegenden Erfindung eine Reaktionsgeschwindigkeit des Verbrennungsmotors auf eine Laständerung, insbesondere auf eine steigende Lastanforderung, verstanden.

Der Verbrennungsmotor kann zur Durchführung des zuvor beschriebenen Verfahrens oder einer seiner Ausführungsformen ausgestaltet sein und umfasst daher auch die im Zusammenhang mit dem Verfahren beschriebenen Vorteile.

Gemäß der vorliegenden Erfindung wird schließlich ein Fahrzeug mit dem zuvor beschriebenen Verbrennungsmotor bereitgestellt.

Die vorliegende Erfindung wird nachfolgend unter Bezugnahme auf die Zeichnung im Detail beschrieben werden.
Fig. 1 zeigt eine Sollgrößen-Ermittlung für einen Verbrennungsmotor gemäß einer Ausführungsform der vorliegenden Erfindung.
Fig. 2 zeigt exemplarisch eine Stellerreserve einer variablen Turbinengeometrie für einen Verbrennungsmotor gemäß einer Ausführungsform der vorliegenden Erfindung.
Fig. 3 zeigt exemplarisch verschiedene Stellerreserven eines variablen Ventiltriebs in Abhängigkeit der Motorlast für einen Verbrennungsmotor gemäß einer Ausführungsform der vorliegenden Erfindung.
Fig. 4 zeigt schematisch eine reserveorientierte Regelstrategie gemäß einer Ausführungsform der vorliegenden Erfindung.
Fig. 5 zeigt schematisch ein Fahrzeug gemäß einer Ausführungsform der vorliegenden Erfindung.

Bei üblichen Ottomotoren ist der thermodynamische Wirkungsgrad aufgrund der notwendigen Drosselung der quantitativen Laststeuerung sowie des reduzierten Verdichtungsverhältnisses zur Vermeidung von Motorklopfen begrenzt. Ein Ansatz zur Entdrosselung im Teillastbetrieb und zur möglichen Erhöhung des geometrischen Verdichtungverhältnisses stellt das so genannte Miller- oder Atkinson-Verfahren dar. Dabei werden über ein frühes bzw. spätes Schließen des Einlassventils der Liefergrad und die effektive Verdichtung reduziert. Dadurch wird der Motor entdrosselt sowie die Verdichtungstemperatur und damit die Klopfneigung reduziert bzw. die geometrische Verdichtung erhöht. Der Liefergrad, welcher das Verhältnis von im Zylinder gefangener Luftmasse zu der theoretischen Luftmasse im Zylinder bestimmt anhand eines thermodynamischen Zustands im Saugrohr nach einem möglichen Ladeluftkühler beschreibt, kann durch das Miller-Verfahren von beispielsweise von 0,95 auf 0,6 bis 0,8 verringert werden. Aufgrund des verringerten Liefergrads kann jedoch ein Leistungsverlust auftreten. Um diesen Leistungsverlust zu vermeiden und trotzdem die Wirkungsgradsteigerung durch das Miller-Verfahren zu erreichen, kann der Verbrennungsmotor mit einem Abgasturbolader, insbesondere einem Abgasturbolader mit variabler Turbinengeometrie, betrieben werden. Bei dynamischen Laständerungen kann jedoch die Totzeit, welche der Turbolader benötigt, um eine angeforderte Ladungsdichte, d.h., einen angeforderten Saugrohrdruck, bereitzustellen, zu einer Verzögerung der gewünschten Leistungsabgabeänderung des Verbrennungsmotors führen. Die Kombination von Aufladung und erhöhtem Verdichtungsverhältnis (Miller-Verfahren) erfordert den Einsatz von Ventiltriebsvariabilitäten sowie geeigneter Betriebs- und Regelstrategien. Ergänzend ist hier der Einfluss einer externen Abgasrückführung (AGR) zu beachten. Bevor auf die erfindungsgemäße Regelung des Verbrennungsmotors bei dynamischen Laständerungen eingegangen wird, wird nachfolgend die Betriebsstrategie der stationären Betriebsarten eines hochverdichteten aufgeladenen Ottomotors nach dem Miller-Verfahren kurz beschrieben.

Folgende Betriebsstrategien können beispielsweise bei folgenden Betriebsarten verwendet werden.

### Niedriger Teillastbetrieb

Im niedrigen Teillastbetrieb wird eine maximale Entdrosselung des Gesamtsystems unter Einhaltung der Laufruhegrenzen angestrebt. Hierzu wird der Ladungswechsel derart durchgeführt, dass ein maximaler Anteil an internem Restgas unter Beachtung der Laufruhegrenzen eingestellt wird. Dies erfolgt durch Frühverstellung des Öffnens der Einlassventile und Spätverstellung des Schließens der Auslassventile. Zudem wird über eine mögliche Ventilhubvariabilität und eine Drosselklappe eine hinsichtlich Ladungswechselarbeit optimale Mischdrosselung aus Ventilhub und Drosselklappenanstellung eingestellt, so dass sich ein leichter Saugrohr Unterdruck einstellt, um eine ausreichende Kurbelgehäuseentlüftung zu gewährleisten.

### Mittlerer Teillastbetrieb bis Saugvolllast

Zur Laststeigerung erfolgt in diesem Lastbereich eine weitere Entdrosselung des Motors durch Öffnen der Drosselklappe sowie, wenn möglich, durch Erhöhung des Liefergrades durch Erhöhung des Ventilshubes. Des Weiteren wird die Auslassnockenwelle nach früh verstellt, um den internen Restgasgehalt zu reduzieren und durch Frischluft zu ersetzen.

### Hochlastbetrieb bis Volllast

Aufgrund der Notwendigkeit des reduzierten Liefergrades zur Reduzierung des effektiven Verdichtungsverhältnisses und damit zur Vermeidung von Motorklopfen ist bereits ab einer moderaten relativen Last rl (Definition: Luftaufwand bezogen auf Normbedingungen in Prozent) eine Erhöhung des Ladedrucks durch das zur Verfügung stehende Aufladeaggregat erforderlich. Zusätzlich können durch Zuführung von externer gekühlter Abgasrückführung (eAGR) zum einen die Klopfneigung und zum anderen die Wandwärmverluste verringert werden. Es gilt daher ein Optimum aus Zündwinkelspätverstellung zur Vermeidung von Motorklopfen durch Reduzierung des effektiven Verdichtungsverhältnisses durch Reduzierung des Liefergrades, Ladedruckbedarf zur Kompensation in der Liefergradreduzierung und externer AGR zur thermischen Optimierung des Hochdruckprozesses darzustellen. Ausgehend von der Saugervolllast erfolgt eine Ansteuerung des Aufladeaggregates. Diese ist abhängig von der jeweiligen Wirkungsgradauslegung des Aufladeaggregates. Zur weiteren Lasterhöhung wird der Liefergrad unter Optimierung des Ladungswechselwirkungsgrades kontinuierlich erhöht. Der Liefergrad kann zusätzlich über den Ventilhub erhöht werden, so dass das Öffnen und Schließen des Einlassventils entkoppelt gesteuert werden kann. Ersatzweise kann dies bei diskreter Ventilhubkorrektur auch über einen schnellen Einlassphasensteller erfolgen. Dabei kann eine Zündwinkelspätverstellung aufgrund möglichen Motorklopfens zugelassen werden, da der Vorteil durch die geringeren Ladungswechselverluste aufgrund des höheren Liefergrades größer ist als der Nachteil in der Hochdruckschleife durch die Zündwinkelspätverstellung. Dieses Verhältnis ändert sich jedoch, wenn Verbrennungsschwerpunktlagen später als ungefähr 16 bis 20° KW nach dem oberen Totpunkt der Zündung eingestellt werden müssen. Diese Grenze ist abhängig von Drehzahl und Wirkungsgradverhalten des Aufladeaggregates. Zur weiteren Laststeigerung kann über den Zeitpunkt des Schließens der Einlassventile der Liefergrad und damit das effektive Verdichtungsverhältnis begrenzt werden. Eine weitere Laststeigerung kann durch Erhöhen der Ladungsdichte durch das Aufladeaggregat, eine Reduzierung der externen Abgasrückführungsrate sowie durch eine Spätverstellung des Schließens der Auslassventile in Kombination mit einem positiven Spülgefälle erfolgen. Dadurch erfolgt ein verbessertes Ausspülen des heissen und die Klopfneigung steigernden internen Restgases. Hierfür kann insbesondere ein Abgasturbolader mit variabler Turbinengeometrie oder ein mechanisch oder elektrisch angetriebener Zusatzverdichter verwendet werden. Eine Minimierung der internen Restgasanteile ist anzustreben. Mit zunehmender Motordrehzahl und damit zunehmendem Massenstrom verschiebt sich die maximale Ansteuerung des Turboladers zu geringeren Ansteuerungen, um stets ein optimales Verhältnis aus Saugrohr- und Abgasgegendruck einzustellen.

Die zuvor beschriebene Betriebsstrategie für einen aufgeladenen hochverdichteten Ottomotor mit Ventiltriebsvariabilitäten resultiert in einem erweiterten möglichen Parameterraum zur Lastregelung. Allgemein gilt, dass das Motormoment direkt proportional zu der im Zylinder gefangenen Frischluftmasse m_{l, zyl} ist. Somit gilt: ${M}_{d} ∼ {m}_{l , Zyl} = {λ}_{l} ⋅ {V}_{h} ⋅ {ρ}_{SGR} = {λ}_{l} ⋅ {V}_{h} ⋅ \frac{{p}_{SGR}}{{R}_{SGR} ∗ {T}_{SGR}}$ (1) mit:
- *λₗ*: Liefergrad
- *Vₕ*: Hubvolumen eines Zylinders
- *ρ*: Dichte
- *p*: Druck
- *R*: Gaskonstante
- *T*: Temperatur
- Index SGR: Saugrohr.

Bei konventionellen Verbrennungsmotoren ergeben sich der Liefergrad und der interne Restgasanteil aus den vorgegebenen Ventilsteuerzeiten und variieren in einem Bereich von näherungsweise 0,9 bis 1,05. Mittels eines variablen Ventiltriebs kann der Liefergrad theoretisch von näherungsweise 0,1 bis 1,05 variiert werden und darüber hinaus der interne Restgasanteil aktiv eingestellt werden. Gemäß dem Prinzip des Miller-Verfahrens beeinflusst der Wirkungsgrad nicht nur die Füllung des Zylinders, sondern auch die Klopfneigung und damit das darstellbare Moment und den erreichbaren Wirkungsgrad des Verbrennungsmotors. Daraus folgt, dass für einen aufgeladenen, hochverdichteten Ottomotor nach dem Miller-Verfahren der Liefergrad der Frischluftfüllung und der Saugrohrdruck gemäß der Gleichung (1) für jeden Betriebszustand in einen betriebsoptimalen Zusammenhang gesetzt werden müssen. Aus der Sollfüllung an Frischluftmasse wird ein Sollliefergrad, eine Sollladungsdichte und ein Sollrestgasanteil hergeleitet. Der Sollliefergrad und der Sollrestgasanteil werden durch die Ventiltriebsvariabilität eingeregelt. Die Sollladungsdichte wird durch die Drosselklappe und/oder ein Einstellventil der Aufladeeinheit eingeregelt. Der Liefergrad ist im Wesentlichen umgekehrt proportional zu der Saugrohrdichte bzw. dem Saugrohrdruck. Daraus folgt, dass zwei voneinander abhängige Regler auf eine Zielgröße, nämlich die Frischluftfüllung, regeln.

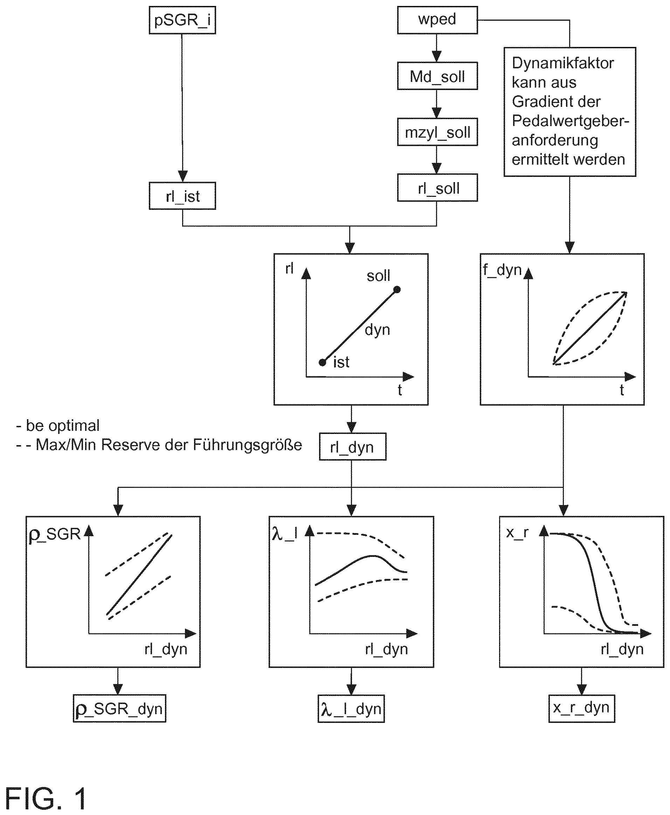

Fig. 1 zeigt einen schematischen Ablauf einer Sollgrößen-Ermittlung für die zur Verfügung stehenden Regler der Lastregelung. Ausgehend von einem Fahrerwunsch wped, welcher über das Fahrpedal erfasst wird, erfolgt die Bestimmung eines Sollmoments Md_soll und, unter Berücksichtigung der innermotorischen Wirkungsgrade, die Bestimmung einer Sollfrischluftfüllung mzyl_soll. Diese Sollfrischluftfüllung wird betriebszustandsabhängig in eine relative Solllast rl_soll umgerechnet, aus welcher die Sollwerte der Führungsgrößen der zur Verfügung stehenden Lastregler abgeleitet werden. Parallel dazu wird aus dem aktuellen Saugrohrdruck pSGR_i die aktuelle Last rl_ist des Verbrennungsmotors bestimmt. Aus der Differenz zwischen relativer Solllast rl_soll und aktueller relativer Last rl_ist wird die dynamische Sollgröße rl_dyn bestimmt. Bei einem hochverdichteten aufgeladenen Ottomotor nach dem Miller-Verfahren sind dies beispielhaft die Ladungsdichte im Saugrohr ρ_SGR, der Liefergrad λ_l und der Restgasanteil x_r. Die Saugrohrdichte ρ_SGR kann beispielhaft durch eine Drosselklappe oder ein Regelventil der verwendeten Aufladeeinheit (Turbolader) eingestellt werden. Der Liefergrad λ_l und der Restgasanteil x_r können über eine Ventiltriebsvariabilität eingestellt werden. Die Ventiltriebsvariabilität kann beispielsweise durch einen kontinuierlich verstellbaren mittensymmetrischen Einlassventilhub über eine Betätigung einer Exzenterwelle sowie eine Phasenverstellung der Ein- und Auslassnockenwelle realisiert werden. Es erfolgt eine untergeordnete Koordination dieser drei Steller, welche durch koordinierte Stellung durch Vorsteuerung und Regelung des Schließens des Auslassventils über den Auslassnockenwellenphasensteller sowie durch Vorsteuerung und Regelung des Öffnens und Schließens des Einlassventils über den Einlassnockenwellenphasensteller und den Ventilhubsteller die Sollführungsgrößen einstellen. Durch Ermittlung eines Dynamikfaktors f_dyn aus einer Geschwindigkeit der Fahrpedalverstellung wird zudem eine dynamische Beeinflussung der Sollgrößen Liefergrad λ_l und Restgasanteil x_r durchgeführt. Dies erfolgt durch eine nachfolgend beschriebene reserveorientierte Führung der Regelführungsgrößen.

Bei konventionellen Ottomotoren wird anhand der Fahrpedalstellung ein Fahrerwunschmoment ermittelt. Daraus erfolgt eine Sollzylinderfüllung, woraufhin alle thermodynamisch relevanten Motorsteller, wie zum Beispiel Drosselklappe, Nockenwellenphasensteller, Ladedrucksteller, entsprechend einer Vorsteuerung auf diese Sollzylinderfüllung eingestellt werden. Aufgrund des reduzierten Liefergrades zur Reduzierung von Motorklopfen und der damit verbundenen Abhängigkeit der Dynamik des Füllungsaufbaus insbesondere durch das Aufladeaggregat führt diese Strategie der Führungsgröße zu großen Dynamik- und Wirkungsgradeinbußen bei einem Betrieb eines aufgeladenen hochverdichteten Ottomotors nach dem Miller-Verfahren.

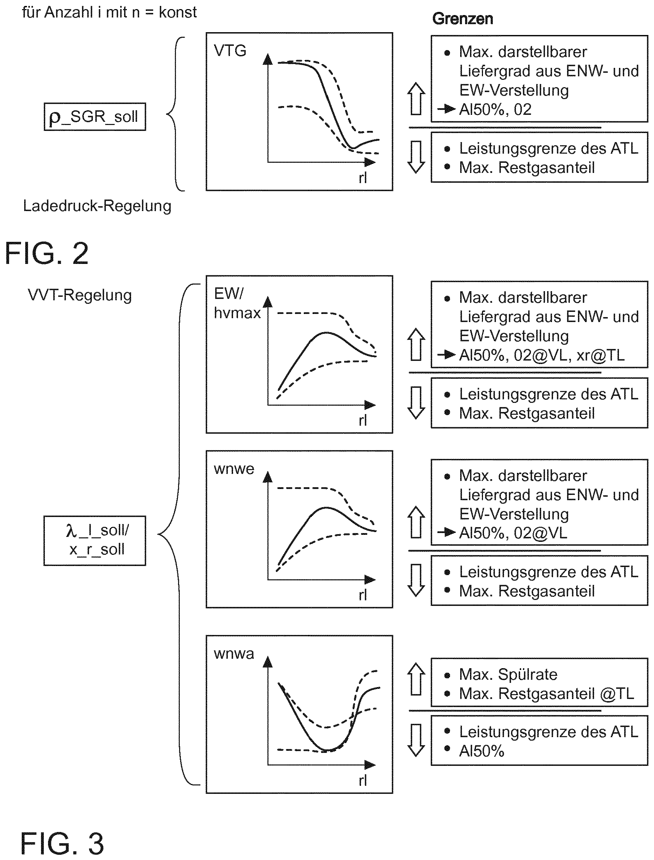

Daher wird eine vektorielle Führung der Sollgröße "Zylinderfrischluftfüllung" zur Verbesserung des Ansprechverhaltens verwendet. In Abhängigkeit von der Differenz zwischen relativer Solllast rl_soll und relativer Ist-Last rl_ist wird die dynamische Sollgröße rl_dyn definiert, welche in Abhängigkeit von dem momentan abrufbaren Liefergrad- und Ladungsdichteaufbau bestimmt wird. Dabei wird eine Totzeit der Stellglieder für die Änderung des Liefergrades und des Ladungsdichteaufbaus berücksichtigt, weshalb die Liefergradregelung stets der führende Steller ist und die Regelung der Ladungsdichte der folgende Steller ist. Hierfür wird eine reserveorientierte Bedatung der beschriebenen Abhängigkeiten der Sollführungsgrößen und der begrenzenden Größe von den zur Verfügung stehenden Stellern als Basis für eine reserveorientierte Führungsstrategie zur Vorsteuerung und Regelung des Motormoments bestimmt und verwendet. Dies kann beispielsweise mittels eines künstlichen neuronalen Netzes oder einer physikalischen Modellierung bestimmt werden. Die Führungsgrößen Sollliefergrad, Sollladungsdichte und Sollrestgasanteil können unter Beachtung der bei vorgegebenen Klopfgrenzen erreichbaren Schwerpunktlagen sowie der Laufruhe bedatet bzw. modelliert werden. Figuren 2 und 3 zeigen entsprechende Stellerreserven in Abhängigkeit der Last rl bei einer konstanten Drehzahl. Der Einstellbereich eines Turboladers mit variabler Turbinengeometrie (VTG), welcher die Sollsaugrohrdichte ρ_SGR_soll bestimmt, ergibt sich aus dem maximal darstellbaren Liefergrad aus der Einlassnockenwellenverstellung (ENW) und der Exzenterwellenverstellung (EW) eines mechanischen Ventiltriebs, welche damit repräsentativ für einen Ventilhub ist, einem Kurbelwellenwinkel des 50%-igen Energieumsatzpunktes (AI 50%), einer Sauerstoffkonzentration im Abgas (O2) einer Leistungsgrenze des Abgasturboladers sowie einem maximalen Restgasanteil. Die vollvariable Ventiltriebregelung (VVT-Regelung) steuert den Sollliefergrad λ_I_soll und die Sollrestgasrate x_r_soll. Die beeinflussbaren Steller sind die Exzenterwelle (EW), welche den maximalen Ventilhub des variablen Ventiltriebes (hvmax) bestimmt, die Phasenlage der Einlassnockenwelle relativ zum Ladungswechsel-Oberertotpunkt (wnwe) und die Phasenlage der Auslassnockenwelle relativ zum Ladungswechsel-Oberertotpunkt (wnwa). Die weiteren in der Fig. 3 verwendeten Abkürzungen bedeuten:
O2@VL: Sauerstoffkonzentration im Abgas bei Volllast,
xr@TL: Restgasrate bei Teillast.

Die gestrichelten Linien in den Diagrammen der Figuren 2 und 3 geben jeweils den möglichen Einstellbereich des entsprechenden Stellers bei einer bestimmten konstanten Drehzahl in Abhängigkeit der relativen Last rl an.

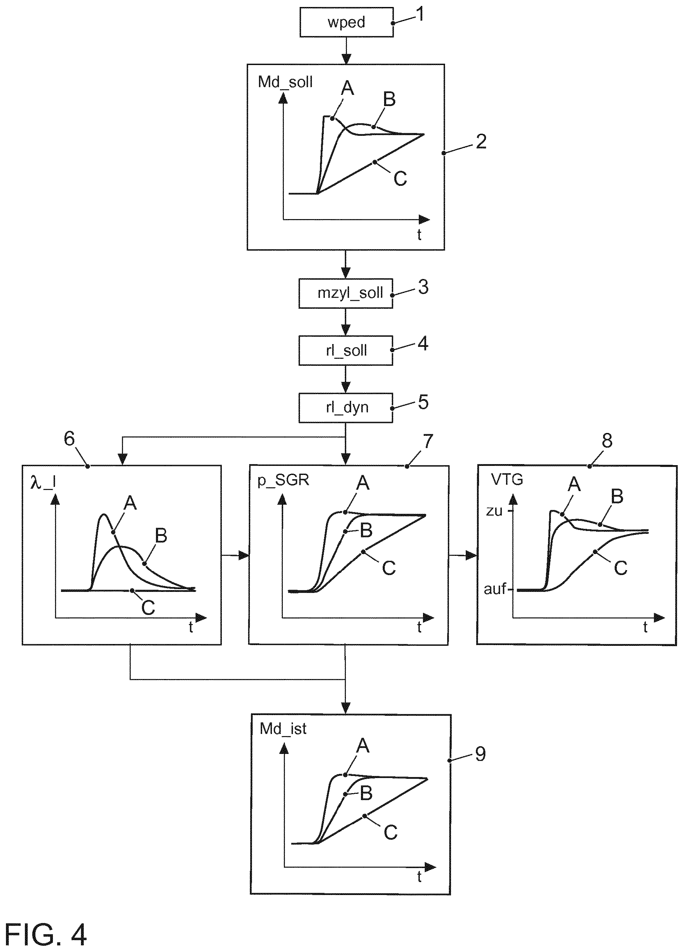

Die unter Bezugnahme auf Fig. 1 zuvor beschriebene Betriebsstrategie, insbesondere die reserveorientierte Führungsstrategie der Momentenregelung, wird nachfolgend am Beispiel dreier Lastsprünge unter Bezugnahme auf Fig. 4 beschrieben werden. Dabei werden drei unterschiedliche Fälle A, B und C angenommen, bei welchen ein Fahrer des Fahrzeugs über das Gaspedal die jeweilige Laständerung mit unterschiedlicher Dynamik anfordert. Im Schritt 1 wird über das Gaspedal wped die von dem Fahrer angeforderte Laständerung erfasst. Im Diagramm 2 sind entsprechende Graphen A, B, C für die Fälle A, B, C gezeigt. Bei dem Graph A wünscht sich der Fahrer die maximal zur Verfügung stehende Beschleunigung und pendelt sich dann auf ein konstant hohes Drehmoment Md_soll ein. Bei dem Graph B ist das Zielmoment das gleiche wie beim Graph A, die Anforderung an die Dynamik bzw. den Drehmomentenaufbau ist jedoch wesentlich geringer, d.h., der Fahrer tritt das Gaspedal mit einer verringerten Geschwindigkeit nieder. Der Graph C zeigt eine Anforderung für einen wirkungsgradoptimalen Drehmomentverlauf. Das Zieldrehmoment der Graphen A, B, C im Diagramm 2 ist jeweils das gleiche.

Wie zuvor unter Bezugnahme auf Fig. 1 beschrieben wurde, wird aus dem Solldrehmoment Md_soll im Schritt 3 eine Zylindersollfüllung mzyl_soll und daraus im Schritt 4 eine relative Solllast rl_soll bestimmt. Unter Berücksichtigung der Dynamik der Gaspedalbewegung der Graphen A, B und C wird im Schritt 5 ein Sollwert für die dynamische Luftfüllung im Zylinder rl_dyn bestimmt. Die Diagramme 6, 7 und 8 zeigen die daraus abgeleiteten Einstellung für den Liefergrad λ_l, den Saugrohrdruck p_SGR, welcher der Ladungsdichte entspricht, und der variablen Turbinengeometrie VTG eines Abgasturboladers, welche aus dem Saugrohrdruck p_SGR bestimmt wird. Um das Drehmoment im Fall A beim Lastsprung möglichst schnell ansteigen zu lassen, wird der Ventiltrieb (schneller Steller) über Einlassphase und/oder Ventilhub so verstellt, dass der maximal mögliche Liefergrad aus der im Zusammenhang mit Fig. 3 reserveorientierten Füllungsbedatung erzielt wird. Gleichzeitig wird die variable Turbinengeometrie (langsamer Steller) verändert, um den Ladedruck zu erhöhen. Durch die Erhöhung des Liefergrads und des Ladedrucks wird die Füllung des Motors maximiert und es stellt sich ein schneller Anstieg des Drehmoments Md_ist ein, wie es in Diagramm 9 mit dem Graph A gezeigt ist. Im Fall B, welcher einen moderaten Lastsprung anfordert, wird der Liefergrad über den Ventiltrieb im Vergleich zum Fall A deutlich weniger stark angehoben. Die variable Turbinengeometrie wird gleichzeitig verändert, um den Ladedruck möglichst schnell anheben zu können. Insgesamt ergibt sich so ein langsamerer Lastsprung im Vergleich zum Fall A, wodurch jedoch auch ein erheblich besserer Wirkungsgrad erzielt werden kann. Im Fall C ist der geforderte Drehmomentanstieg über der Zeit so gering, dass der Liefergrad immer wirkungsgradoptimal eingestellt werden kann. Bei einem hochverdichteten Miller-Brennverfahren kann der Liefergrad daher auf niedrigem Niveau bleiben, wie im Diagramm 6 über den Graph C gezeigt ist. Der Drehmomentanstieg kann hier allein über die Erhöhung der Saugrohrdichte p_SGR mittels der Verstellung der variablen Turbinengeometrie VTG des Abgasturboladers geregelt werden, d.h. nur über das langsamere Stellglied. Dadurch kann ein wirkungsgradoptimaler Betrieb des Verbrennungsmotors erreicht werden.

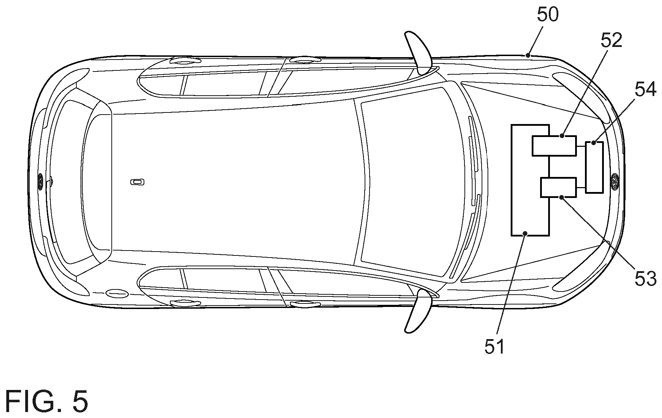

Fig. 5 zeigt schließlich ein Fahrzeug 50 mit einem Verbrennungsmotor 51. Der Verbrennungsmotor 51 umfasst einen Abgasturbolader 52 mit einer variablen Turbinengeometrie sowie einen variablen Ventiltrieb 53. Der Verbrennungsmotor 51 umfasst weiterhin eine Steuervorrichtung 54, welche ausgestaltet ist, eine dynamische Sollgröße für den Verbrennungsmotor 51 in Abhängigkeit von einer Differenz zwischen einer Lastanforderung von beispielsweise einem Fahrer des Fahrzeugs an den Verbrennungsmotor 51 und einer aktuellen Lastabgabe des Verbrennungsmotors 51 zu bestimmen. Ferner ist die Steuervorrichtung 54 ausgestaltet, den Liefergrad über den variablen Ventiltrieb 53 und die Ladungsdichte über den Abgasturbolader 52 in Abhängigkeit von der dynamischen Sollgröße einzustellen.

## Patentansprüche

1. Verfahren zum Betreiben eines Verbrennungsmotors, wobei der Verbrennungsmotor (51) einen Verdichter (52) zum Einstellen einer Ladungsdichte (p_SGR) in einem Saugrohr des Verbrennungsmotors (51) und ein Einstellmittel (53) zum Einstellen eines Liefergrads (λ_l) des Verbrennungsmotors (51) umfasst, wobei das Einstellmittel (53) zum Einstellen des Liefergrads einen variablen Ventiltrieb umfasst, wobei das Verfahren umfasst:
- Bestimmen einer dynamischen Sollgröße (rl_dyn) für den Verbrennungsmotor (51) in Abhängigkeit von einer Differenz zwischen einer relativen Soll-Last (rl_soll) an den Verbrennungsmotor (51) und einer relativen Ist-Last (rl_ist) des Verbrennungsmotors (51) und in Abhängigkeit von einer zeitlichen Änderung (f_dyn) der Lastanforderung, wobei eine relative Last den Luftaufwand bezogen auf Normbedingungen in Prozent angibt, und
- Einstellen des Liefergrads (λ_l) und der Ladungsdichte (p_SGR) in Abhängigkeit von der dynamischen Sollgröße (rl_dyn), wobei das Einstellen des Liefergrads (λ_l) umfasst:
- Bestimmen eines Einstellbereichs eines Ventilhubs (EW) des variablen Ventiltriebs in Abhängigkeit von der relativen Ist-Last (rl_ist),
- Bestimmen eines Einstellbereichs einer Phasenlage (wnwe) einer Einlassnockenwelle des variablen Ventiltriebs in Abhängigkeit von der relativen Ist-Last (rl_ist),
- Bestimmen eines Einstellbereichs einer Phasenlage (wnwd) einer Auslassnockenwelle des variablen Ventiltriebs in Abhängigkeit von der relativen Ist-Last (rl_ist), und
- Einstellen des Ventilhubs (EW), der Phasenlage (wnwe) der Einlassnockenwelle und der Phasenlage (wnwa) der Auslassnockenwelle in Abhängigkeit von der dynamischen Sollgröße (rl_dyn) innerhalb der jeweiligen bestimmten Einstellbereiche basierend auf einem physikalischen Modell oder einem künstlichen neuronalen Netzwerk.

2. Verfahren nach Anspruch 1, **dadurch gekennzeichnet, dass** das Einstellen des Liefergrads und der Ladungsdichte umfasst:
- Einstellen der Ladungsdichte (p_SGR) in Abhängigkeit von der dynamischen Sollgröße (rl_dyn) und dem eingestellten Liefergrad (λ_l).

3. Verfahren nach Anspruch 2, **dadurch gekennzeichnet, dass** das Einstellmittel ferner zur Einstellung eines Restgasanteils (x_r) in einer Zylinderfüllung des Verbrennungsmotors (51) ausgestaltet ist, wobei das Verfahren ferner umfasst:
- Einstellen des Restgasanteils (x_r) in Abhängigkeit von der dynamischen Sollgröße (rl_dyn), und
- Einstellen der Ladungsdichte (p_SGR) in Abhängigkeit von der dynamischen Sollgröße (rl_dyn), dem eingestellten Liefergrad (λ_l) und dem eingestellten Restgasanteil (x_r).

4. Verfahren nach einem der vorhergehenden Ansprüche, wobei der Verbrennungsmotor (51) einen Ottomotor mit einem geometrischen Verdichtungsverhältnis im Bereich von 12:1 bis 15:1 umfasst, **dadurch gekennzeichnet , dass** der Verbrennungsmotor (51) nach dem Miller-Brennverfahren angesteuert wird.

5. Verfahren nach einem der vorhergehenden Ansprüche, **dadurch gekennzeichnet, dass** der Verdichter (52) von einer Abgasturbine des Verbrennungsmotors (51) mit variabler Turbinengeometrie (VTG) angetrieben wird, wobei das Einstellen der Ladungsdichte (p_SGR) umfasst:
- Bestimmen eines Einstellbereichs der variablen Turbinengeometrie (VTG) in Abhängigkeit von der relativen Ist-Last (rl_ist), und
- Einstellen der variablen Turbinengeometrie (VTG) in Abhängigkeit von der dynamischen Sollgröße (rl_dyn) innerhalb des bestimmten Einstellbereichs.

6. Verbrennungsmotor, umfassend:
- einen Verdichter (52) zum Einstellen einer Ladungsdichte (p_SGR) in einem Saugrohr des Verbrennungsmotors (51),
- ein Einstellmittel (53) zum Einstellen eines Liefergrads (λ_l) des Verbrennungsmotors (51), wobei das Einstellmittel (53) zum Einstellen des Liefergrads einen variablen Ventiltrieb umfasst, und
- eine Steuervorrichtung (54), welche ausgestaltet ist, eine dynamische Sollgröße (rl_dyn) für den Verbrennungsmotor (51) in Abhängigkeit von einer Differenz zwischen einer relativen Soll-Last- (rl_soll) an den Verbrennungsmotor (51) und einer relativen Ist-Last (rl_ist) des Verbrennungsmotors (51) ) und in Abhängigkeit von einer zeitlichen Änderung (f_dyn) der Lastanforderung zu bestimmen und den Liefergrad (λ_l) und die Ladungsdichte (p_SGR) in Abhängigkeit von der dynamischen Sollgröße (rl_dyn) einzustellen, wobei eine relative Last den Luftaufwand bezogen auf Normbedingungen in Prozent angibt und wobei das Einstellen des Liefergrads (λ_l) umfasst:
- Bestimmen eines Einstellbereichs eines Ventilhubs (EW) des variablen Ventiltriebs in Abhängigkeit von der relativen Ist-Last (rl_ist),
- Bestimmen eines Einstellbereichs einer Phasenlage (wnwe) einer Einlassnockenwelle des variablen Ventiltriebs in Abhängigkeit von der relativen Ist-Last (rl_ist),
- Bestimmen eines Einstellbereichs einer Phasenlage (wnwd) einer Auslassnockenwelle des variablen Ventiltriebs in Abhängigkeit von der relativen Ist-Last (rl_ist), und
- Einstellen des Ventilhubs (EW), der Phasenlage (wnwe) der Einlassnockenwelle und der Phasenlage (wnwa) der Auslassnockenwelle in Abhängigkeit von der dynamischen Sollgröße (rl_dyn) innerhalb der jeweiligen bestimmten Einstellbereiche basierend auf einem physikalischen Modell oder einem künstlichen neuronalen Netzwerk.

7. Verbrennungsmotor (51) nach Anspruch 6, **dadurch gekennzeichnet, dass** der Verbrennungsmotor zur Durchführung des Verfahrens nach einem der Ansprüche 1-5 ausgestaltet ist.

8. Fahrzeug mit einem Verbrennungsmotor (51) nach Anspruch 6 oder 7.

## Claims

1. Method for operating an internal combustion engine, wherein the internal combustion engine (51) comprises a compressor (52) for adjusting a charge density (p_SGR) in an intake manifold of the internal combustion engine (51) and an adjusting means (53) for adjusting a volumetric efficiency (λ_l) of the internal combustion engine (51), wherein the adjusting means (53) for adjusting the volumetric efficiency comprises a variable valve train, wherein the method comprises:
- determining a dynamic setpoint (rl_dyn) for the internal combustion engine (51) according to a difference between a relative target load (rl_soll) on the internal combustion engine (51) and a relative actual load (rl_ist) of the internal combustion engine (51) and according to a temporal change (f_dyn) of the load requirement, wherein a relative load indicates the air consumption relative to standard conditions in percent, and
- adjusting the volumetric efficiency (λ_l) and the charge density (p_SGR) according to the dynamic setpoint (rl_dyn), wherein adjusting the volumetric efficiency (λ_l) comprises:
- determining an adjustment range of a valve lift (EW) of the variable valve train according to the relative actual load (rl_ist),
- determining an adjustment range of a phase position (wnwe) of an intake camshaft of the variable valve train according to the relative actual load (rl_ist),
- determining an adjustment range of a phase position (wnwd) of an exhaust camshaft of the variable valve train according to the relative actual load (rl_ist), and
- adjusting the valve lift (EW), the phase position (wnwe) of the intake camshaft and the phase position (wnwa) of the exhaust camshaft according to the dynamic setpoint (rl_dyn) within the respective determined adjustment ranges based on a physical model or an artificial neural network.

2. Method according to claim 1, **characterized in that** adjusting the volumetric efficiency and the charge density comprises:
- adjusting the charge density (p_SGR) according to the dynamic setpoint (rl_dyn) and the adjusted volumetric efficiency (λ_l).

3. Method according to claim 2, **characterized in that** the adjusting means is further configured to adjust a residual gas fraction (x_r) in a cylinder filling of the internal combustion engine (51), the method further comprising:
- adjusting the residual gas fraction (x_r) according to the dynamic setpoint (rl_dyn), and
- adjusting the charge density (p_SGR) according to the dynamic setpoint (rl_dyn), the adjusted volumetric efficiency (λ_l) and the adjusted residual gas fraction (x_r).

4. Method according to any of the preceding claims, the internal combustion engine (51) comprising a gasoline engine with a geometric compression ratio in the range of 12:1 to 15:1, **characterized in that** the internal combustion engine (51) is controlled according to the Miller combustion process.

5. Method according to any of the preceding claims, **characterized in that** the compressor (52) is driven by an exhaust gas turbine of the internal combustion engine (51) with variable turbine geometry (VTG), the adjustment of the charge density (p_SGR) comprising:
- determining an adjustment range for the variable turbine geometry (VTG) according to the relative actual load (rl_ist), and
- adjusting the variable turbine geometry (VTG) according to the dynamic setpoint (rl_dyn) within the determined adjustment range.

6. Internal combustion engine, comprising:
- a compressor (52) for adjusting a charge density (p_SGR) in an intake manifold of the internal combustion engine (51),
- an adjusting means (53) for adjusting a volumetric efficiency (λ_l) of the internal combustion engine (51), wherein the adjusting means (53) for adjusting the volumetric efficiency comprises a variable valve train, and
- a control device (54) which is configured to determine a dynamic setpoint (rl_dyn) for the internal combustion engine (51) according to a difference between a relative target load (rl_soll) on the internal combustion engine (51) and a relative actual load (rl_ist) of the internal combustion engine (51)) and according to a temporal change (f_dyn) of the load requirement and to adjust the volumetric efficiency (λ_l) and the charge density (p_SGR) according to the dynamic setpoint (rl_dyn), wherein a relative load indicates the air consumption relative to standard conditions in percent and wherein adjusting the volumetric efficiency (λ_l) comprises:
- determining an adjustment range of a valve lift (EW) of the variable valve train according to the relative actual load (rl_ist),
- determining an adjustment range of a phase position (wnwe) of an intake camshaft of the variable valve train according to the relative actual load (rl_ist),
- determining an adjustment range of a phase position (wnwd) of an exhaust camshaft of the variable valve train according to the relative actual load (rl_ist), and
- adjusting the valve lift (EW), the phase position (wnwe) of the intake camshaft and the phase position (wnwa) of the exhaust camshaft according to the dynamic setpoint (rl_dyn) within the respective determined adjustment ranges based on a physical model or an artificial neural network.

7. Internal combustion engine (51) according to claim 6,
**characterized in that** the internal combustion engine is configured to carry out the method according to any of claims 1 to 5.

8. Vehicle having an internal combustion engine (51) according to claim 6 or 7.

## Revendications

1. Procédé permettant de faire fonctionner un moteur à combustion interne, dans lequel le moteur à combustion interne (51) comprend un compresseur (52) permettant de régler une densité de charge (p_SGR) dans un collecteur d'admission du moteur à combustion interne (51) et un moyen de réglage (53) permettant de régler un coefficient de rendement (λ_l) du moteur à combustion interne (51), dans lequel le moyen de réglage (53) comprend, pour régler le coefficient de rendement, un système de commande variable des soupapes, dans lequel le procédé comprend :
- la détermination d'une grandeur de consigne dynamique (rl_dyn) pour le moteur à combustion interne (51) en fonction d'une différence entre une charge de consigne relative (rl_soll) appliquée au moteur à combustion interne (51) et une charge réelle relative (rl_ist) du moteur à combustion interne (51) et en fonction d'une variation dans le temps (f_dyn) de la demande de charge, dans lequel une charge relative indique, en pourcentage, la consommation d'air par rapport aux conditions normalisées, et
- le réglage du coefficient de rendement (λ_l) et de la densité de charge (p_SGR) en fonction de la grandeur de consigne dynamique (rl_dyn), dans lequel le réglage du coefficient de rendement (λ_l) comprend :
- la détermination d'une plage de réglage d'une course de soupapes (EW) du système de commande variable des soupapes en fonction de la charge réelle relative (rl_ist),
- la détermination d'une plage de réglage d'une position de phase (wnwe) d'un arbre à cames d'admission du système de commande variable des soupapes en fonction de la charge réelle relative (rl_ist),
- la détermination d'une plage de réglage d'une position de phase (wnwd) d'un arbre à cames d'échappement du système de commande variable des soupapes en fonction de la charge réelle relative (rl_ist), et
- le réglage de la course de soupape (EW), de la position de phase (wnwe) de l'arbre à cames d'admission et de la position de phase (wnwa) de l'arbre à cames d'échappement en fonction de la grandeur de consigne dynamique (rl_dyn) dans les plages de réglage respectives déterminées, sur la base d'un modèle physique ou d'un réseau neuronal artificiel.

2. Procédé selon la revendication 1, **caractérisé en ce que** le réglage du coefficient de rendement et de la densité de charge comprend :
- le réglage de la densité de charge (p_SGR) en fonction de la grandeur de consigne dynamique (rl_dyn) et du coefficient de rendement (λ_l) réglé.

3. Procédé selon la revendication 2, **caractérisé en ce que** le moyen de réglage est en outre configuré pour régler une proportion de gaz résiduel (x_r) lors d'un remplissage du cylindre du moteur à combustion interne (51), dans lequel le procédé comprend en outre :
- le réglage de la proportion de gaz résiduel (x_r) en fonction de la grandeur de consigne dynamique (rl_dyn), et
- le réglage de la densité de charge (p_SGR) en fonction de la grandeur de consigne dynamique (rl_dyn), du coefficient de rendement (λ_l) réglé et de la proportion de gaz résiduel (x_r) réglée.

4. Procédé selon l'une des revendications précédentes, dans lequel le moteur à combustion interne (51) comprend un moteur à allumage par étincelles comportant un rapport de compression géométrique compris dans la plage allant de 12:1 à 15:1, **caractérisé en ce que** le moteur à combustion interne (51) est piloté selon le cycle de combustion de Miller.

5. Procédé selon l'une des revendications précédentes,
**caractérisé en ce que** le compresseur (52) est entraîné par une turbine à gaz d'échappement du moteur à combustion interne (51) à géométrie de turbine variable (VTG), dans lequel le réglage de la densité de charge (p_SGR) comprend :
- la détermination d'une plage de réglage de la géométrie de turbine variable (VTG) en fonction de la charge réelle relative (rl_ist), et
- le réglage de la géométrie de turbine variable (VTG) en fonction de la grandeur de consigne dynamique (rl_dyn) dans la plage de réglage déterminée.

6. Moteur à combustion interne, comprenant :
- un compresseur (52) permettant de régler la densité de charge (p_SGR) dans un collecteur d'admission du moteur à combustion interne (51),
- un moyen de réglage (53) permettant de régler un coefficient de rendement (λ_l) du moteur à combustion interne (51), dans lequel le moyen de réglage (53) comprend, pour régler le coefficient de rendement, un système de commande variable des soupapes, et
- un dispositif de commande (54) configuré pour déterminer une grandeur de consigne dynamique (rl_dyn) pour le moteur à combustion interne (51) en fonction d'une différence entre une charge de consigne relative (rl_soll) appliquée au moteur à combustion interne (51) et une charge réelle relative (rl_ist) du moteur à combustion interne (51) et en fonction d'une variation dans le temps (f_dyn) de la demande de charge, et pour régler le coefficient de rendement (λ_l) et la densité de charge (p_SGR) en fonction de la grandeur de consigne dynamique (rl_dyn), dans lequel une charge relative indique, en pourcentage, la consommation d'air par rapport aux conditions normalisées, et dans lequel le réglage du coefficient de rendement (λ_l) comprend :
- la détermination d'une plage de réglage d'une course de soupapes (EW) du système de commande variable des soupapes en fonction de la charge réelle relative (rl_ist),
- la détermination d'une plage de réglage d'une position de phase (wnwe) d'un arbre à cames d'admission du système de commande variable des soupapes en fonction de la charge réelle relative (rl_ist),
- la détermination d'une plage de réglage d'une position de phase (wnwd) d'un arbre à cames d'échappement du système de commande variable des soupapes en fonction de la charge réelle relative (rl_ist), et
- le réglage de la course de soupapes (EW), de la position de phase (wnwe) de l'arbre à cames d'admission et de la position de phase (wnwa) de l'arbre à cames d'échappement en fonction de la grandeur de consigne dynamique (rl_dyn) dans les plages de réglage respectives déterminées sur la base d'un modèle physique ou d'un réseau neuronal artificiel.

7. Moteur à combustion interne (51) selon la revendication 6,
**caractérisé en ce que** le moteur à combustion interne est conçu pour l'exécution du procédé selon l'une des revendications 1 à 5.

8. Véhicule comportant un moteur à combustion interne (51) selon la revendication 6 ou 7.
